# EUROPÄISCHE PATENTANMELDUNG

(11) **EP 1 147 977 A2**
(43) Veröffentlichungstag der Anmeldung: **24.10.2001**
(21) Anmeldenummer: 01108882.0
(22) Anmeldetag: 10.04.2001
(51) Int. Cl.: B62K 27/00, B62K 9/00

(54) **Pedalgetriebener Anhänger**

(30) Priorität: 19.04.2000 DE 20007213 U
(71) Anmelder: Dino-Cars Evers GmbH, 26899 Rhede/Brual (DE)
(72) Erfinder: Evers, Theo, 26899 Rhede/Brual (DE); Leithoff, Herold, 26506 Norddeich (DE)
(74) Vertreter: Eikenberg, Kurt-Rudolf, Dr. Dipl.-Chem.

(57) **Zusammenfassung**

Beschrieben wird ein Tretauto (9) mit Anhänger, der über ein zug- und druckstabiles Gelenk (20) an das Tretauto angekoppelt ist. Der Anhänger besitzt mindestens eine Radachse und zeichnet sich dadurch aus, daß er Antriebsmittel, z.B. einen pedalgetriebenen Kettenantrieb, zum Antreiben der Radachse enthält. Es können auf diese Weise beliebig viele Anhänger hintereinandergeschaltet werden, ohne daß das Tretauto als Zugmaschine belastet wird.

## Beschreibung

Die vorliegende Erfindung betrifft einen Anhänger für ein Tretauto, wobei der Anhänger zumindest einen Passagiersitz, eine Radachse und ein Gelenk zur zug- und druckstabilen Ankopplung an ein Tretauto umfaßt. Die Erfindung betrifft ferner einen Zug aus einem Tretauto und zumindest einem solchen Anhänger.

Tretautos im Sinne dieses Textes sind pedalgetriebene Landfahrzeuge mit gewöhnlich drei oder vier Rädern und zumindest einem Sitz für einen Fahrer. Solche Tretautos erfreuen sich insbesondere bei Kindern großer Beliebtheit, sie werden jedoch auch z.B. in Freizeitparks als Beförderungsmittel für Jugendliche und Erwachsene angeboten. In der täglichen Praxis ergibt sich in beiden Fällen häufig das Problem, daß Gruppen aus mehreren Personen ein Tretauto gemeinsam nutzen wollen. Bisher behalf man sich damit, mehr als einen Sitzplatz auf dem Tretauto bereitzustellen. Der maximalen Anzahl der mit einem Tretauto beförderbaren Personen sind so jedoch relativ enge Grenzen gesetzt, die sich beispielsweise aus der begrenzten Tragkraft von Chassis und Rädern eines solchen Tretautos ergeben. Im übrigen ist es bei einem üblichen Tretauto wegen des begrenzten Platzes nur schwer möglich, mehr als zwei Plätze mit Pedalen zum Antreiben des Tretautos auszurüsten, sodaß der oder die Fahrer mit zunehmender Anzahl der Mitfahrer einer stetig wachsenden Belastung ausgesetzt ist/sind.

Anstatt weitere Sitzplätze auf dem Tretauto selbst bereitzustellen, werden gelegentlich Anhänger mit zumindest einem Passagiersitz und einer Radachse angeboten, die über ein Gelenk zug- und druckstabil an ein Tretauto angekoppelt werden können. Solche Anhänger entlasten zwar das Tretauto vom unmittelbaren Gewicht der Mitfahrer, sie entbinden jedoch den oder die Fahrer nicht davon, als einzige(r) die Kraft für den Antrieb eines solchen Zuges aufbringen zu müssen. Die maximale Anzahl der Mitfahrer kann dementsprechend auch durch das Vorsehen solcher Anhänger nicht wesentlich erhöht werden.

Aufgabe der vorliegenden Erfindung war es daher, Mittel anzugeben, mit denen die beschriebenen Nachteile entschärft werden können.

Die Aufgabe wird erfindungsgemäß gelöst durch das Vorsehen eines Anhängers, der Antriebsmittel zum Antreiben der (Anhänger-)Radachse umfaßt. Über die Radachse wird eine von den Antriebsmitteln vermittelte Antriebskraft an ein oder mehrere Antriebsräder zur Fortbewegung des Anhängers übertragen.

Durch das Vorsehen von Antriebsmitteln am Anhänger wird auf vorteilhaft einfache Weise erreicht, daß ein solcher Anhängers über seine Antriebsräder jeweils selbst die zu seiner Fortbewegung aufzubringende Kraft ausüben kann, das Tretauto kann auf diese Weise von seiner Funktion als Zugmaschine weitgehend entlastet werden. Da somit auch die Belastung der Tretauto-Antriebsmittel (insbesondere Pedalen, Kette, angetriebene Räder) verringert wird, reduziert sich dementsprechend auch der Verschleiß dieser Bauteile.

Zur Ankopplung des Anhängers an ein Tretauto wird ein Gelenk verwendet, das eine zug- und druckstabile Verbindung ermöglicht. Das Gelenk ist dabei so auszulegen, daß eine sichere Verbindung von Tretauto und Anhänger auch bei unterschiedlichen Beschleunigungen beider Fahrzeuge gewährleistet ist. Insbesondere beim Anfahren oder Abbremsen eines Zuges aus Tretauto und Anhänger ist es sehr wahrscheinlich, daß die Beschleunigung beider Fahrzeuge nicht völlig synchron erfolgt. Dies kann einerseits zu starken Zugbelastungen des Gelenks führen, wenn sich das Tretauto (beispielsweise beim Anfahren) kurzzeitig schneller bewegt als der Anhänger. Umgekehrt kann es zu starken Druckbelastungen des Gelenks kommen, wenn das Tretauto relativ zum Anhänger schneller fährt (z.B. wenn das Tretauto gebremst wird).

Das Gelenk ermöglicht es ferner, Tretauto und Anhänger relativ zueinander zu verschwenken, wie es beispielsweise beim Durchfahren einer Kurve oder beim überwinden von Bodenunebenheiten nötig ist.

Es kann dabei vorteilhaft sein, das Gelenk mit einer Zug- und/oder Druckfeder auszurüsten, um die soeben beschriebenen stoßweise auftretende Zug- und/oder Druckbelastungen des Gelenks zu dämpfen. Dies würde zu einem erhöhten Fahrkomfort und einer verringerten Gelenk-Belastung und damit zu einer Verringerung des Materialverschleißes beitragen.

Als Gelenke sind, insbesondere wegen ihres einfachen Aufbaus, Kardangelenke und Stiftverbindungen (Bolzenverbindungen) mit zumindest in vertikaler Richtung hohem Spiel besonders bevorzugt.

In bevorzugten Ausführungsformen umfassen die Anhänger-Antriebsmittel eine Pedal-Tretachse sowie ein mit dieser in Wirkverbindung stehendes Zugmittelgetriebe. Als Zugmittel kann insbesondere eine Kette oder ein Zahnriemen dienen. Bei der Herstellung solcher Anhänger-Antriebe kann zu einem Großteil auf etablierte Herstellungsverfahren für den Tretauto-Antrieb zurückgegriffen werden. Dadurch wird die Herstellung solcher Anhänger-Antriebe vorteilhaft vereinfacht, außerdem werden die Entwicklungskosten reduziert. Ferner ergibt sich hieraus zwanglos eine positiv einheitliches Erscheinungsbild von Tretauto und Anhänger.

Ferner ist ein Anhänger bevorzugt, der Bremsmittel zum Abbremsen zumindest eines an der Anhänger-Radachse angebrachten Antriebsrades umfaßt. Auf diese Weise wird erreicht, daß nicht nur die Antriebskraft, sondern auch die Kraft zum Abbremsen eines Zuges (Tretauto und zumindest ein erfindungsgemäßer Anhänger) über die Fahrzeuge verteilt werden kann. Dies beugt einem übermäßigen Materialverschleiß an den Bremsmitteln des Tretautos vor.

Besonders bevorzugt sind dabei solche Anhänger, bei denen als Bremsmittel eine Rücktrittsbremse dient. Solche Rücktrittsbremsen sind besonders platzsparend, ihre Herstellung ist seit langem etabliert und ihre Bedienung ist auch für Kinder unmittelbar einleuchtend.

In besonders bevorzugten Ausführungsformen umfaßt der Anhänger ein Gelenk zur zug- und druckstabilen Ankopplung eines (weiteren) Anhängers. Auf diese Weise kann ein Zug aus einem Tretauto und zumindest einem Anhänger um weitere Anhänger nahezu beliebig erweitert werden. Für die Auslegung des Gelenkes gilt entsprechend das oben zur Verbindung von Anhänger und Tretauto Gesagte.

Schließlich ist Gegenstand der Erfindung auch ein Fahrzeugzug, umfassend ein Tretauto und ein mit diesem über ein zug- und druckstabiles Gelenk verbundener Anhänger der zuvor beschriebenen Art. Solche Züge lösen, wie beschrieben, auf vorteilhaft einfache Weise die gestellte Aufgabe.

Die Erfindung wird nachstehend beispielhaft unter Bezugnahme auf die beigefügten schematischen Zeichnungen beschrieben, in denen:
- Fig. 1: eine Seitenansicht auf einen erfindungsgemäßen Anhänger zeigt und
- Fig. 2: eine Seitenansicht auf einen Fahrzeugzug mit einem Tret- auto und einem Anhänger gemäß Fig. 1 zeigt.

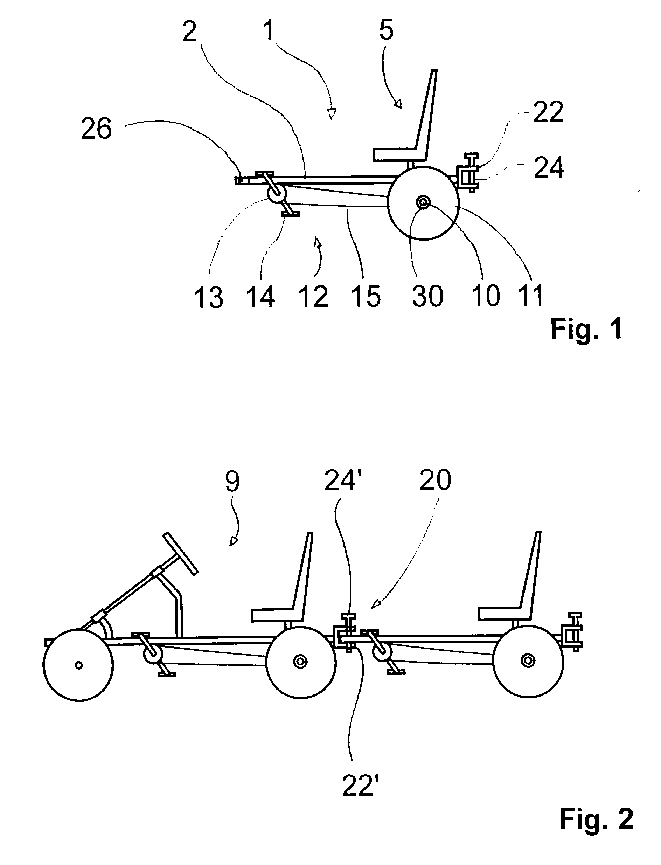

Der in Figur 1 dargestellte Anhänger 1 umfaßt ein Chassis 2, an dem ein Passagiersitz 5 befestigt ist. Vorzugsweise sind zwei nebeneinander angeordnete Sitze vorgesehen. Der Anhänger 1 umfaßt ferner Antriebsmittel 12 zum Antreiben einer Radachse 10, an der Antriebsräder 11 (nur eines dargestellt) befestigt sind. Das Antriebsmittel 12 umfaßt eine Pedal-Tretachse 13 mit Pedalen 14, diese sind in Fußreichweite eines üblichen Benutzers vom Passagiersitz 5 entfernt am Chassis 2 angeordnet. Wenn der Anhänger 1 zwei nebeneinander angeordnete Passagiersitze 5 umfaßt, so sind vorzugsweise jedem Passagiersitz 5 ein eigener Satz Pedale 14 in Fußreichweite eines üblichen Benutzers zugeordnet. über eine Kette oder einen Zahnriemen 15 steht die Pedal-Tretachse 13 in Wirkverbindung mit der Radachse 10 und über diese auch mit den Rädern 11, so daß über jeden Pedalsatz 14 eine Antriebskraft auf die Räder 11 ausgeübt werden kann.

Der Anhänger umfaßt ferner Bremsmittel 30 zum Abbremsen eines Rades 11. Als Bremsmittel 30 dient ein eine an der Radachse 10 angebrachte Rücktrittsbremse. Zusätzlich oder anstelle der Rücktrittsbremse kann auch ein handbetätigter Bremshebel vorgesehen sein, der mit dem Chassis 2 drehbar verbunden ist und bei Betätigung auf das Rad 11 durch Reibung eine Bremskraft ausüben kann.

Der Anhänger 1 weist am Chassis 2 hinter dem Passagiersitz 5 eine c-förmige Gabel 22 und einen beweglichen Bolzen 24 auf. Der Bolzen 24 kann zumindest teilweise aus der Gabel 22 herausgezogen werden, um so den Bereich zwischen den Gabellaschen freizugeben.

Das Chassis 2 endet auf der der Gabel 22 gegenüberliegenden Seite in einer Stange, die in einer Öse 26 ausläuft. Die Funktionsweise von Öse 26, Gabel 22 und Bolzen 24 wird bei der Beschreibung von Fig. 2 noch deutlich werden.

Das in Fig. 2 dargestellte Tretauto 9 umfaßt auf seiner Hinterseite eine Gabel 22', die über einen Bolzen 24' formschlüssig mit Öse 26 des Anhängers 1 aus Fig. 1 verbunden ist (auf die Wiederholung von Bezugszeichen, die aus Figur 1 bekannt sind, wurde der Übersichtlichkeit halber verzichtet). In der Abbildung wird deutlich, daß Anhänger 1 und Tretauto 9 gegeneinander seitlich (senkrecht zur dargestellten Bildebene) und vertikal verschwenkt werden können, dabei ist jedoch das Spiel zwischen Bolzen 24' und Öse 26 (nicht dargestellt) nur gering, sodaß sich der Abstand zwischen Tretauto 9 und Anhänger 1 nur unwesentlich ändern kann. Tretauto 9 und Anhänger 1 sind also zug- und druckstabil über Gelenk 20 (gebildet aus Gabel 22', Bolzen 24' und Öse 26 des Chassis 2) miteinander verbunden.

Anstelle der dargestellten Bolzenverbindung kann auch eine andere Gelenkverbindung verwendet werden, beispielsweise kann ein Kardangelenk die gleiche Aufgabe erfüllen.

Zur Benutzung eines Zuges aus Tretauto 9 und zumindest einem Anhänger 1 wird zunächst das Tretauto 9 mit einem Anhänger 1 über Gelenk 20 verbunden. Entsprechend der Anzahl der zu befördernden Personen können dem Zug weitere Anhänger 1 zugefügt werden, indem diese jeweils über Gabel 22, Bolzen 24 und Öse 26 mit dem jeweils letzten Anhänger 1 des Zuges verbunden werden. Zur Fortbewegung üben Fahrer und Mitfahrer über die jeweiligen Antriebsmittel von Tretauto 9 und Anhänger(n) 1 die zum Antrieb erforderlichen Antriebskräfte aus. Dementsprechend wird der Zug abgebremst, indem Fahrer und/oder Mitfahrer die jeweiligen Bremsmittel von Tretauto 9 bzw. Anhänger 1 betätigen.

## Patentansprüche

1. Anhänger (1) für ein Tretauto (9), wobei der Anhänger (1) zumindest einen Passagiersitz (5), eine Radachse (10) und ein Gelenk (20) zur zug- und druckstabilen Ankopplung an ein Tretauto (9) umfaßt, **dadurch gekennzeichnet, daß** der Anhänger ferner Antriebsmittel (12) zum Antreiben der Radachse (10) umfaßt.

2. Anhänger (1) nach Anspruch 1, **dadurch gekennzeichnet, daß** die Antriebsmittel (12) eine Pedal-Tretachse (13) sowie ein mit dieser in Wirkverbindung stehendes Zugmittelgetriebe (15) umfassen.

3. Anhänger (1) nach einem der vorherigen Ansprüche, **dadurch gekennzeichnet, daß** der Anhänger (1) ferner Bremsmittel (30) zum Abbremsen zumindest eines an der Radachse (10) angebrachten Rades (11) umfaßt.

4. Anhänger (1) nach Anspruch 3, **dadurch gekennzeichnet, daß** als Bremsmittel (30) eine Rücktrittsbremse dient.

5. Anhänger (1) nach einem der vorherigen Ansprüche, **dadurch gekennzeichnet, daß** der Anhänger (1) ein Gelenk (25) zur zug- und druckstabilen Ankopplung eines Anhängers (1) umfaßt.

6. Fahrzeugzug, umfassend ein Tretauto (9) und ein mit diesem über ein zug- und druckstabiles Gelenk verbundener Anhänger (1) nach einem der vorangehenden Ansprüche.
